# EUROPÄISCHE PATENTSCHRIFT

(11) **EP 1 197 677 B1**
(45) Veröffentlichungstag und Bekanntmachung des Hinweises auf die Patenterteilung: **21.09.2005**
(21) Anmeldenummer: 01124100.7
(22) Anmeldetag: 10.10.2001
(51) Int. Cl.: F16F 15/08

(54) **Getriebelagerung für Windkraftanlagen**
Transmission support for wind-power installations
Support de transmission pour éoliennes

(30) Priorität: 14.10.2000 EP 00122517
(43) Veröffentlichungstag der Anmeldung: 17.04.2002
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- DE-U- 29 806 010
- US-A- 4 134 343
- US-A- 6 107 705
- PATENT ABSTRACTS OF JAPAN vol. 004, no. 105 (M-023), 26. Juli 1980 (1980-07-26) & JP 55 063026 A (NIPPON KENTETSU CO LTD), 12. Mai 1980 (1980-05-12)
- PATENT ABSTRACTS OF JAPAN vol. 016, no. 484 (M-1322), 7. Oktober 1992 (1992-10-07) & JP 04 175526 A (TOYO TIRE & RUBBER CO LTD), 23. Juni 1992 (1992-06-23)

## Beschreibung

Die Erfindung betrifft eine neuartige Getriebelagerung, welche im wesentlichen mindestens zwei, vorzugsweise drei keilförmig und bezüglich ihrer Geometrie und Ausstattung besonders ausgestaltete Elastomerlager umfaßt, und in einer besonderen Ausführungsform zusätzlich um den Getriebeblock umlaufende, elastomere Lagerelemente aufweist. Mittels der erfindungsgemäßen Lagerung können während des Betriebes erzeugte unerwünschte in x-, y- und z-Richtung gerichtete Schwingungskräfte (Zug-, Druck-, Quer - und Scherkräfte), inklusive Körperschallereignisse, gedämpft bzw. entkoppelt werden. Die Getriebelagerung gemäß der Erfindung ist insbesondere für Windkraftanlagen aber auch für andere Maschinen und Anlagen, welche ähnliche Schwingungs- und Krafteinwirkungsprofile aufweisen, geeignet.

Die Antriebswellen von Motoren oder Getrieben sind sehr häufig Schwingungen ausgesetzt, die an verschiedenen Teilen der Maschine durch Krafteinwirkung unterschiedlicher Art entstehen. Aus diesem Grunde ruhen die entsprechenden Maschinenteile auf Lagerungen, welche die Kräfte reduzieren bzw. dämpfen und so dem verstärkten Verschleiß einzelner besonders belasteter Komponenten entgegenwirken. Überdies wird hierdurch eine zumindest teilweise Körperschallentkopplung erreicht, wodurch die Übertragung von Störgeräuschen durch die bewegenden Teile auf die Tragekonstruktion reduziert werden können.

Windkraftanlagen unterliegen naturgemäß zusätzlichen und besonders ausgeprägten Kräften, welche vor allem durch die Rotorbewegung als solche, insbesondere in Form von Unwuchten, als auch durch teilweise extreme Winde, die aus verschiedensten Richtungen auf die Rotorblätter und die Anlage insgesamt einwirken, erzeugt werden.

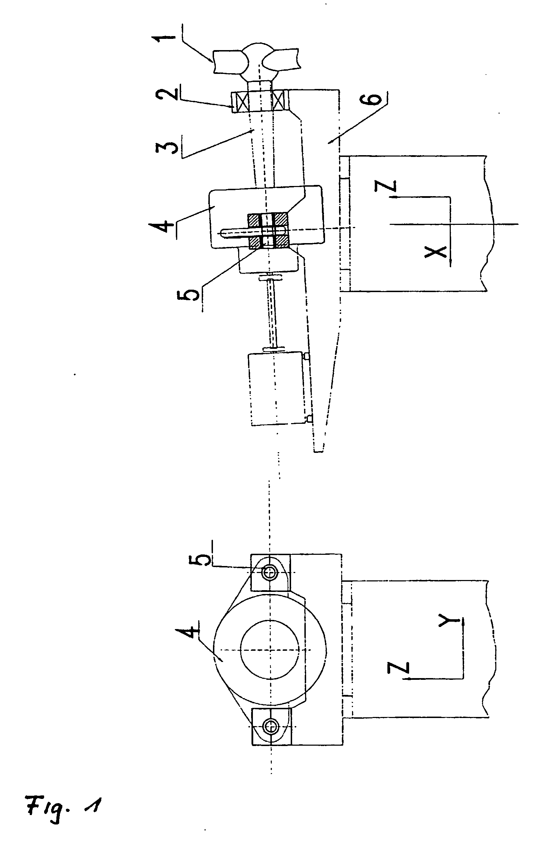

Der Antriebsstrang bei Windkraftanlagen wird häufig mittels einer Dreipunktlagerung auf dem Maschinenträger gelagert. Die am Rotor (1) entstehenden Kräfte und Momente werden dabei, wie in Fig. 1 dargestellt, von dem Stehlager (2) und zwei Gummiaufhängungen (5) auf den Maschinenrahmen übertragen. Die Gummiaufhängungen (5), in der Regel in Form von Ultrabuchsen, welche aus einer Innenbuchse und einer Außenbuchse mit einer oder mehreren zwischen den beiden Buchsen befindlichen Elastomerschicht bestehen, müssen Kräfte in radialer z-y- Richtung übertragen und in axialer x-Richtung möglichst weich sein um das am Stehlager (2) vorhandene Lagerspiel ohne große Rückstellkräfte ausgleichen zu können.

Zur Zeit übliche Lagerungen des Standes der Technik sind mit jeweils einer oder mehreren Ultrabuchsen (5) je Getriebeseite ausgeführt. Diese benötigen aufgrund der runden Form einen großen Einbauraum. Sie müssen weiterhin eingepreßt oder als geteilte Buchsen verspannt eingebaut werden. Ultrabuchsen sind nur bedingt mit mehr als zwei Schichten herstellbar. Die geringe Schicht Anzahl bedeutet, daß die Lager überdimensional groß gebaut werden müssen und die axiale Steifigkeit der Buchse dadurch verhältnismäßig groß ist. Das bedeutet wiederum, daß die durch das Lagerspiel des Stehlagers (2) bedingte axiale Verschiebung des Getriebes aufgrund der axial steifen Elastomerlagerung des Getriebes (4) (geringe Nachgiebigkeit) hohe Rückstellkräfte auf die Wälzlager der Getriebewelle bewirkt. Dadurch wird die Lebensdauer der Getriebe Wälzlager beeinträchtigt. Der Aufwand zur Aufnahme und Befestigung der großen Ultrabuchsen mit der durchgesteckten Achse ist erheblich.

Das US-Patent 6,107,705 beschreibt eine Aufhängungs-, bzw. Halterungsvorrichtung für rotierende elektrische Maschinen, die im wesentlichen einen Rotor, einen koaxial zum Rotor befindlichen Ständer und ein Gehäuse umfassen, welches mit dem Ständer über Halterungspunkte und Halterungselementen verbunden ist. Die Halterungselemente stellen ein elastomeres beschichtetes Verbundmaterial dar, welches sich aus abwechselnden Elastomerschichten und Stapeln von Stahlplatten zusammensetzt. Die Halterungselemente weisen eine anisotrope Steifigkeit mit einer radialen und tangentialen Kraftkomponente auf, wodurch die vom Rotor erzeugten Vibrationen auf den Ständer übertragen und dann von den elastischen Halterungselementen gedämpft werden und somit nur im abgeschwächten Maß auf das Gehäuse weitergeleitet werden können. Aufbau und Anordnung der Elastomerlagerung lassen eine Eignung für die Dämpfung von Schwingungen in gängigen elektrisch betriebenen Maschinen erkennen, bei denen übliche Kräfte auftreten bzw. einwirken.

Es bestand somit die Aufgabe eine Lagerung für Windkraftanlagen oder Anlagen mit vergleichbaren Krafteinwirkungen zur Verfügung zu stellen, welche verbesserte Eigenschaften in Bezug auf Schwingungsdämpfung und Körperschallentkopplung unter Einwirkung besonderer und komplex angreifender Kräfte aufweisen und zudem aufgrund ihrer erfindungsgemäßen Geometrie weniger Raumbedarf benötigen, der insbesondere bei Windkraftanlagen problematisch ist, als dies im vergleichbaren Stand der Technik bislang realisiert worden ist.

Gegenstand der Erfindung ist somit eine Lagerung für Motoren oder Getriebe zur Dämpfung von unerwünschten Schwingungen im wesentlichen bestehend aus mindestens zwei elastomeren Lagern, die zueinander und gegenüber dem Motor / Getriebe in besonderer Weise angeordnet sind, die dadurch gekennzeichnet ist, dass sie Keillager (13) umfaßt, die jeweils aus einem mit Befestigungsmitteln (25) ausgestattetem Klemmschuh (26) bestehen, welcher aus einem oberen (9) und unteren (8) Klemmflansch gebildet wird, der zwei schräge Flächen aufweist, die einen Keilwinkel (14, 15) zueinander bilden und mit mehrschichtigen Elastomerbauteilen (10) versehen sind - beide Klemmflansche (8, 9) bilden einen Raum, der dafür vorgesehen ist, den mit dem gleichen Keilwinkel (14, 15) ausgestatteten Maschinenkeil (7) mit Hilfe der Befestigungsmittel (25) passend in den Klemmschuh (26) zu verspannen - wobei besagte Keillager (13), welche als solche die Lagerung bilden, radial zur Antriebs- oder Getriebewelle positioniert sind, und die mehrschichtigen Elastomerbauteile (10) bezüglich ihrer Längenausdehnung in Längsrichtung der Antriebs- / Getriebewelle angeordnet sind.

In einer Ausführungsform, ist der Keilwinkel eines jeden Lagers in Richtung der Antriebs-/Getriebewelle geöffnet.

Im Gegensatz zur US 6,107,705, bei der die elastomeren Stapel parallel zur Tangente des kreisförmigen Ständers, welcher die rotierende Welle umschließt, angeordnet sind, die elastomeren Schichten sich also in ihrer Längsausdehnung radial zur Achse ausrichten, nehmen die mehrschichtigen Elastomerbauteile der vorliegenden Erfindung, bedingt durch die keilförmige Bauweise der erfindungsgemäßen Lager, erfindungsgemäß stets einen Winkel gegenüber der Achse ein und sind überdies im Gegensatz zur US 6,107,705 verspannbar. Hierdurch kann das dynamische Verhalten der gesamten Anlage gezielt beeinflusst werden.

Gegenstand der Erfindung ist ferner ein Verfahren zur Körperschallisolierung und zur Dämpfung von unerwünschten Schwingungskräften, welche in angetriebenen Maschinen in x-, y- und z - Richtung auftreten.

Gegenstand der Erfindung ist weiterhin die Verwendung der entsprechenden Lagerung in Windkraftanlagen.

Im folgenden werden die Bezugszeichen kurz erläutert:
- (1): Rotor
- (2): Stehlager
- (3): Rotorwelle
- (4): Getriebe
- (5): Ultrabuchse mit durchgeführter Achse zur Kraftumlenkung
- (6): Maschinenträger
- (7): Getriebekeil
- (8): unterer Klemmflansch
- (9): oberer Klemmflansch
- (10): Elastomerlager
- (11): Gummischichten des Elastomerlagers
- (12): Zwischenbleche des Elastomerlagers
- (13): Gesamte Keillagerung
- (14): Keilwinkel Druckseite
- (15): Keilwinkel Entlastungsseite
- (16): Rotordrehmoment
- (17): Durch Rotrordrehmoment belastete Seite
- (18): Durch Rotordrehmoment entlastete Seite
- (19): Im Getriebegehäuse integriertes Rotorlager
- (20): Umlaufende verspannte Elastomerlagerelemente
- (21): Getriebe Tragekonsole
- (22): Getriebe Trage - Flansch
- (23): Keil an Tragekonsole
- (24): Klemm- Verspannung der umlaufenden Elastomer Lagerelemente
- (25): Befestigungsmittel
- (26): Klemmschuh bestehend aus (8) und (9)

Im folgenden werden die Abbildungen kurz erläutert:
- Fig. 1:: Lagerung nach dem Stand der Technik (Schematische Übersicht)

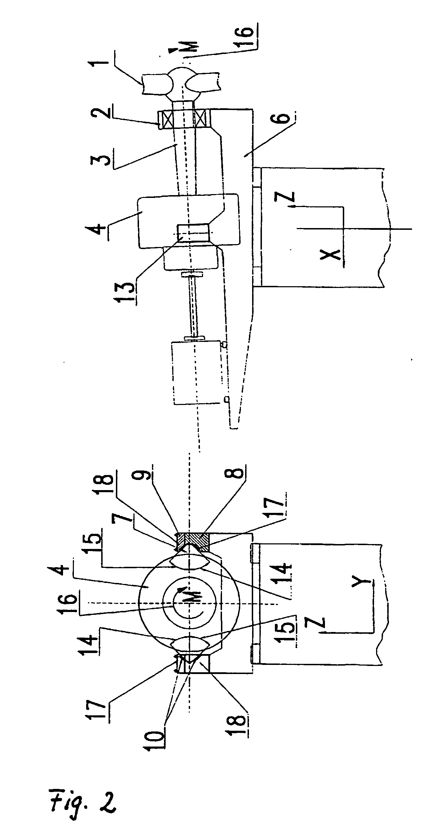

- Fig. 2:: erfindungsgemäße Lagerung (Schematische Übersicht)
- Fig. 3:: Schnitt durch Getriebe mit Keillagerung
- Fig. 4:: Detailzeichnung zu Abb. 3
- Fig. 5:: Größenvergleich Buchsenlagerung nach dem Stand der Technik (linke Bildhälfte) mit Keillagerung (rechte Bildhälfte)
- Fig. 6:: Keillagerung mit drei Elementen am Umfang

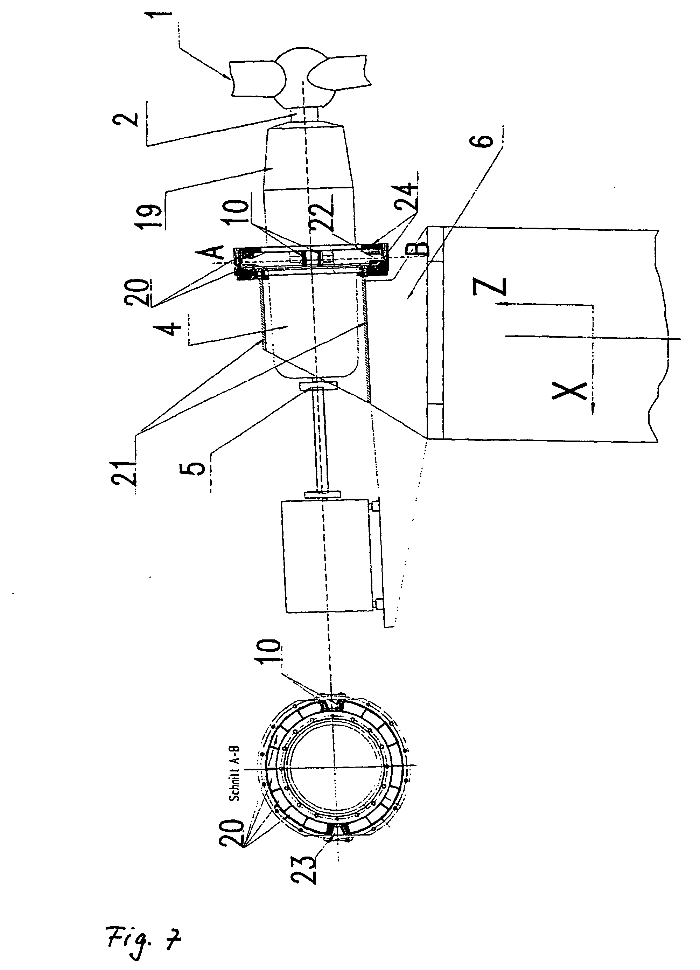

- Fig. 7:: integrierter Rotorlagerung mit umlaufenden elastischer Lagerelementen.

Im folgenden wird die Erfindung näher beschrieben:

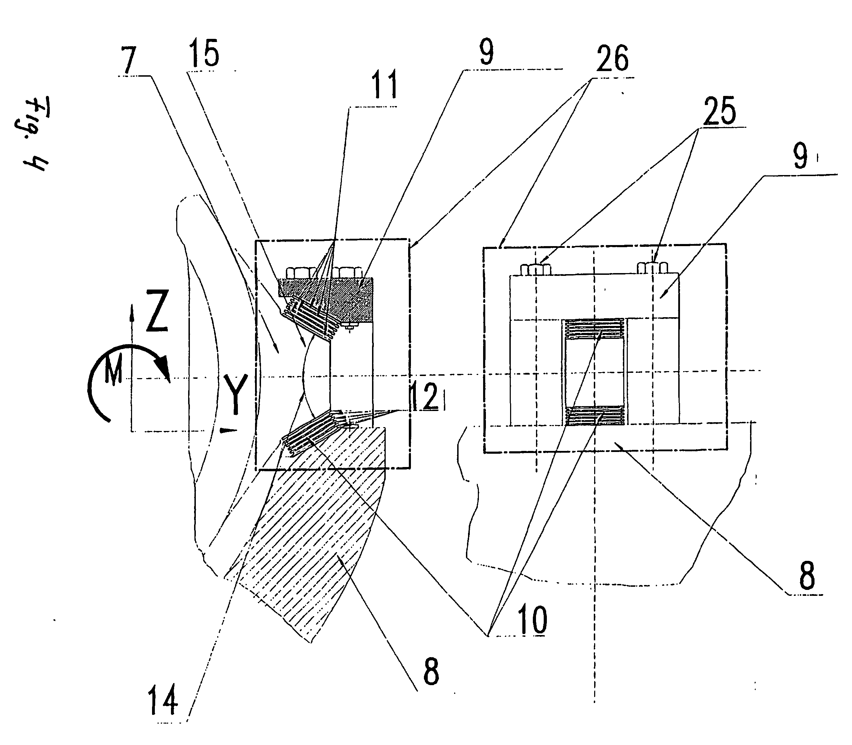

Der Keilwinkel, der durch die schrägen Flächen der Klemmflansche (8, 9) entsteht, die im wesentlichen den Klemmschuh (26) bilden, setzt sich aus den Teilwinkeln (14 und 15) (Fig. 4) zusammen und hat erfindungsgemäß einen Wert von 10 - 60°. Den entsprechenden Wert haben somit die oben und in Anspruch 1 beschriebenen Keillager (13) sowie die Maschinenkeile (7), welche fest mit dem zu dämpfenden Maschinenblock verbunden sind.

Gegenstand der Erfindung ist somit eine Lagerung, die einen Keilwinkel (14, 15) von 10 - 60°, insbesondere 20 - 45°, aufweist.

Der Keilwinkel innerhalb der genannten Grenzen ist dabei entsprechend nach den Gegebenheiten und Belastungen der Anlage auszuwählen. Aufgrund der erfindungsgemäßen Anordnungen und Ausrichtung und Ausstattung der Keillager sowie der elastomeren Teile (10) ist die Lagerung in x - Richtung (das ist die Richtung, in welcher definitionsgemäß die Antriebswelle des Getriebes / Motors ausgerichtet ist) erfindungsgemäß stets weich (kleiner ca. 10kN / mm und Lagerstelle), wodurch Kräfte, die in erster Linie in dieser Richtung einwirken, ausgeglichen werden können d.h. die axial von der Rotorwelle (3) auf das Getriebe (4) übertragenen Kräfte werden bei mehrschichtigen Systemen geringer. Falls das Elastomerlager nämlich in x - Richtung eine große Steifigkeit aufweisen würde, entstünden somit hohe Kräfte, die von der Rotorwelle auf das Getriebe übertragen würden. Dies hat bei Anlagen des Standes der Technik bereits häufig zu Getriebeschäden geführt. Der Keilwinkel der Keillager (13) beinflussen somit lediglich die Steifigkeiten in y - und z - Richtung. Ein hoher Keilwinkel (40 - 65°) bewirkt eine zunehmende Steifigkeit in y - Richtung (definitionsgemäß die horizontale Richtung) und eine abnehmende Steifigkeit in z - Richtung (definitionsgemäß die vertikale Richtung), während ein geringer Keilwinkel (40 - 10°) eine zunehmende Steifigkeit in z - Richtung und eine abnehmende Steifigkeit in y - Richtung zur Folge hat. Bei dem Keilwinkel von 45° sind beide Steifigkeiten gleich. Durch die Wahl des Keilwinkels kann somit das dynamische Verhalten der gesamten Windkraftanlage gezielt beeinflußt werden.

Die erfindungsgemäß zum Einsatz kommenden Elastomerlager (10) sind an sich bekannt und bestehen im wesentlichen aus Elastomerschichten (11), welche durch unelastische, nicht-elastomere feste Zwischenschichten (12), voneinander getrennt sind. Die erfindungsgemäß verwendeten Elastomermaterialien bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere; mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben.

Vorzugsweise werden handelsübliche Naturkautschuke oder Kunststoffe eingesetzt.

Die nicht elastomeren Schichten (12) sind erfindungsgemäß aus weitestgehend unelastischen Werkstoffen mit geringer Kompressibilität gefertigt. Vorzugsweise sind dies Metallbleche, aber auch andere Materialien, wie harte Kunststoffe, Verbundwerkstoffe oder carbonfaserhaltige Werkstoffe sind einsetzbar.

Die Zwischenbleche und die Elastomermaterialien werden in der Regel durch Vulkanisierung miteinander verbunden.

Erfindungsgemäß bestehen die Elastomerlager (10) aus zwei bis acht elastomeren Schichten (11), vorzugsweise drei bis sechs, insbesondere drei oder vier, und werden in flacher Ausführung verwendet. Es ist aber auch erfindungsgemäß möglich, konkav oder konvex gekrümmte Elastomerlager (10) einzusetzen, welche den Vorteil haben, dass sie weniger verschleißanfällig sind. In diesen Fällen ist es erforderlich, auch die schrägen Flächen der Klemmflansche (8, 9) in der entsprechenden Form auszubilden.

Gegenstand der Erfindung ist somit eine entsprechende Lagerung bei der die Elastomerlager (10) aus zwei bis sechs, vorzugsweise drei bis vier Elastomerschichten (11) bestehen, die durch Zwischenbleche (12) voneinander getrennt sind, und gegebenenfalls die schrägen Flächen der Klemmflansche (8, 9) sowie entsprechend die auf ihnen angebrachten besagten Elastomerlager konkav oder konvex ausgebildet sind.

Im Falle einer Windkraftanlage werden durch die Elastomerlager (10) die durch Nickbewegung und Gierbewegung des Rotors (1) entstehenden, in radialer Getrieberichtung wirkenden Kräfte, sowie die durch das Antriebsmoment (16) des Rotors (1) wirkenden Torsionskräfte aufgenommen. Axiale Kräfte werden wie gewünscht nur in geringem Maße übertragen. Die Elastomerlager (10) werden zwischen den beiden Klemmflanschen (8) und (9) und dem Getriebekeil (7) mit Hilfe von Befestigungsmitteln (25), vorzugsweise Schrauben, verspannt. Durch die Schrägstellung der Elemente erfolgt somit eine Verspannung des gesamten Getriebes (4) in radialer Richtung. Die Elastomerschicht (11) ist immer in Druckrichtung vorgespannt und kann unter keinen Umständen auf Zug belastet werden, wodurch die Lebensdauer der Bauteile vergrößert wird. Durch die konstruktive Freiheit bei der Festlegung der Schichtanzahl der Elastomerschichten (11), welche den Gegebenheiten angepaßt werden kann, können die Teile für eine große Lebensdauer bei verhältnismäßig geringem Materialeinsatz optimiert werden.

Das Verhältnis von Drucksteifigkeit zu Schubsteifigkeit wird mit größerer Schichtanzahl der Elastomerlager größer. Das heißt die Elastomerkörper werden mit größerer Schichtanzahl bei z.B. gleicher Drucksteifigkeit in Schubrichtung weicher. Die Schichtanzahl, der Keilwinkel (14, 15) sowie die Shore Härte und Größe der einzelnen Elastomerlager kann bei allen Elementen einer Anlage unterschiedlich sein.

Die Elemente benötigen zur Aufnahme der Kräfte, welche durch das Rotordrehmoment (16) und durch die ungleichmäßige Windbelastung am Rotor auftreten eine verhältnismäßig hohe Steifigkeit in z - Richtung und in y - Richtung (ca. 50 kN / mm bis ca. 600 kN / mm abhängig vom Anlagentyp).

Da im Falle einer Windkraftanlage alle Kräfte in x - Richtung von dem Stehlager (2) aufgenommen werden, müssen die Elastomerlager in x - Richtung keine Kraftübertragung übernehmen. Das Stehlager (2) ist in der Regel als Pendelrollenlager mit axialem Spiel ausgeführt. Somit bewegt sich der Rotor (1) mit der Rotorwelle (3) im Bereich des axialen Spieles (ca. 3 - 4 mm) in x - Richtung.

Es ist im Falle einer Windkraftanlage sinnvoll, die Elastomerbauteile auf der durch das Rotordrehmoment belasteten Seite (17) steifer auszuführen. Damit ist das Getriebe im Stillstand (ohne Drehmoment) durch das Verspannen der Elastomerbauteile gegen die Drehmomentrichtung verdreht. Erst beim Erreichen eines mittleren Drehmomentes wird das Getriebe in die Ausgangslage gedreht. Somit wird eine Einseitige Verformung der Elastomerkörper verhindert, was eine größere Lebensdauer der Elastomerkörper bewirkt.

Bei Verwendung von Elastomerlagern mit gleicher Steifigkeit (weniger verschiedene Bauteile für eine Anlage) kann dieser Effekt dadurch erreicht werden, daß der Keilwinkel auf der Druckseite (14) kleiner ausgeführt wird als der Keilwinkel auf der Entlastungsseite (15). Somit ist die Steifigkeit in z - Richtung auf der Druckseite größer, was die oben beschriebene Verdrehung des Getriebes gegen die Drehmomentrichtung bewirkt.

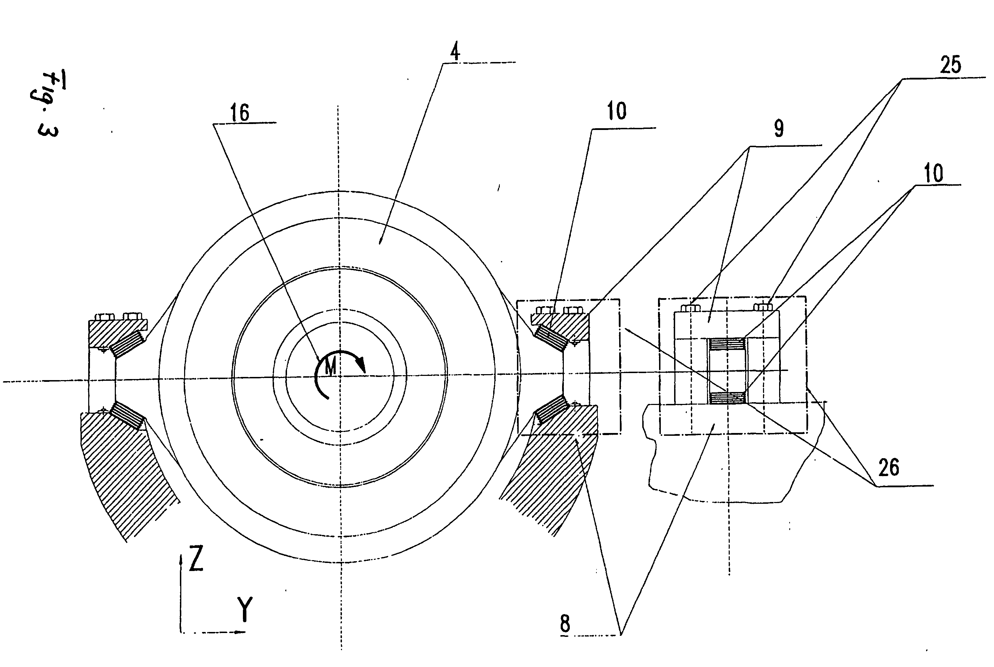

Die erfindungsgemäße Lagerung kann auch in verschiedener Weise modifiziert werden. So kann das Getriebe (4) beispielsweise eine V-förmig ausgebildete Aussparung haben, in welche der Keil von außen hineinragt. (Umkehrung des beschriebenen Systems). Ferner können die beiden Klemmflansche (7, 8) Bestandteil des Maschinenrahmens sein (in Fig. 3 bis 6 ist der untere Klemmflansch (8) Teil des Maschinenrahmens). Die erfindungsgemäßen Lager können, wie in den Abbildungen, dargestellt horizontal auf beiden Getriebeseiten angeordnet sein, sie können aber auch vertikal, d.h. in Form einer Lagerung oberhalb und eine Lagerung unterhalb des Getriebes, angeordnet werden.

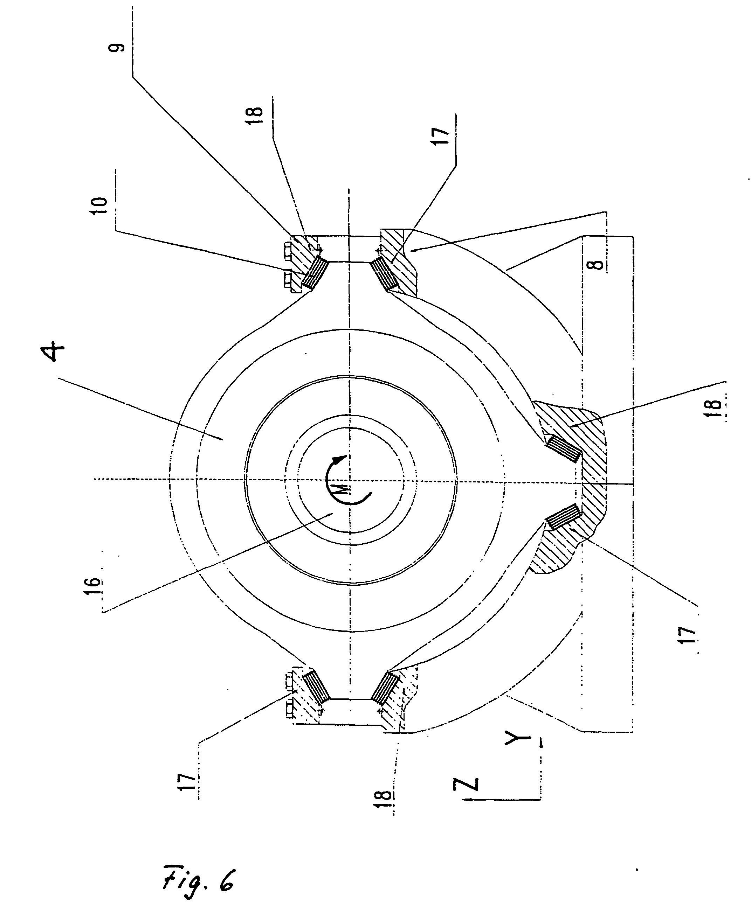

Auch Systeme mit mehr als den näher beschriebenen zwei Lagerpunkten am Getriebeumfang sind möglich. Besonders vorteilhaft sind drei Lagerpunkte (Fig. 6), wobei der dritte Punkt bevorzugt unterhalb des Getriebes / Motors angeordnet ist. Damit wird der Kraftfluß gleichmäßiger auf den Maschinenrahmen geleitet.

Gegenstand der Erfindung ist somit eine entsprechende Lagerung, die dadurch gekennzeichnet ist, dass sie aus drei elastomeren Keillagern (13) besteht. Weiterhin kann durch den Einsatz hochdämpfender Elastomere das Schwingverhalten der gesamten Anlage positiv beeinflußt werden.

In einer weiteren besonderen Ausführungsform enthält die erfindungsgemäße Lagerung ein zusätzliches elastomeres Lagerbauelement, welches vor allem die Aufgabe hat, bei Windkraftanlagen unerwünschte vom Rotor ausgehende und auf die Antriebs- / Getriebewelle einwirkende Torsionskräfte zu reduzieren.

Gegenstand der Erfindung ist somit auch eine entsprechende Lagerung, die dadurch gekennzeichnet ist, dass sie ein weiteres elastomeres Lagerbauelement aufweist, welches aus mehreren mehrschichtigen elastomeren Lagersegmenten (20) besteht, die umlaufend um den Antriebs- / Getriebeblock (4) angeordnet und an einen ebenfalls in gleicher Weise umlaufenden Trageflansch (22), der an einer Tragekonsole (21) angebracht ist, mittels Klemmverspannungen (24) befestigt sind, wobei die mehrschichtigen elastomeren Lagersegmente (20) bezüglich ihrer Längenausdehnung senkrecht zur Antriebs- / Getriebewelle angeordnet sind.

Die elastomeren Elemente (20) sind im Prinzip genau so aufgebaut wie die Elastomerlager (10). Zweckmäßigerweise aber nicht notwendigerweise sind sie als plane Kreissegmente ausgebildet, die, an der Tragekonstruktion befestigt, den Getriebeblock umlaufen. Je nach gewünschter Größe und Durchmesser des Getriebe - / Motorblocks können 4 bis etwa 20, vorzugsweise 8 bis 16 elastomere Lagersegmente (20) eingesetzt werden.
Durch die entsprechende Ausrichtung der Segmente (20) wird nunmehr im Unterschied zu den Elementen (10) eine hohe gleichbleibende Steifigkeit in x - Richtung erzielt, während das System in y - und z - Richtung relativ weich ist. Auch hier kann, wie bei den anderen Elementen, durch Wahl unterschiedlich harter Elastomere eine Variabilität hinsichtlich der Gesamtsteifigkeit erreicht werden.

Das umlaufende aus einzelnen Segmenten (20) bestehende Lagerbauteil kann selbst aus mehreren Teilen bestehen, in einem solchen Fall vorzugsweise aus zwei Teilen. Die einzelnen derartigen Teile, können vorzugsweise durch weitere mehrschichtige elastomere Keillager (23) voneinander getrennt sein. Diese Keillager die mit der Tragekonsole (21) verbunden sind, weisen erfindungsgemäß einen Keilwinkel auf, der zur Antriebs - / Getriebewelle hin geschlossen ist, während die elastomeren Lager, welche auf den schrägen Flächen der Keillager (23) angebracht sind, bezüglich ihrer Längenausdehnung in Längsrichtung der Antriebs- / Getriebewelle angeordnet sind

Gegenstand der Erfindung ist somit eine entsprechende Lagerung, die dadurch gekennzeichnet ist, dass besagtes Lagerbauelement aus mehreren, mindestens zwei Lagersegmente (20) enthaltenden Teilen besteht, welche durch mehrschichtige elastomere Keillager (23) voneinander getrennt sind, die mit der Tragekonsole (21) verbunden sind und einen Keilwinkel aufweisen, der zur Antriebs - / Getriebewelle hin geschlossen ist und die elastomeren Lager (10), welche auf den schrägen Flächen der Keillager (23) angebracht und bezüglich ihrer Längenausdehnung in Längsrichtung der Antriebs- / Getriebewelle angeordnet sind.

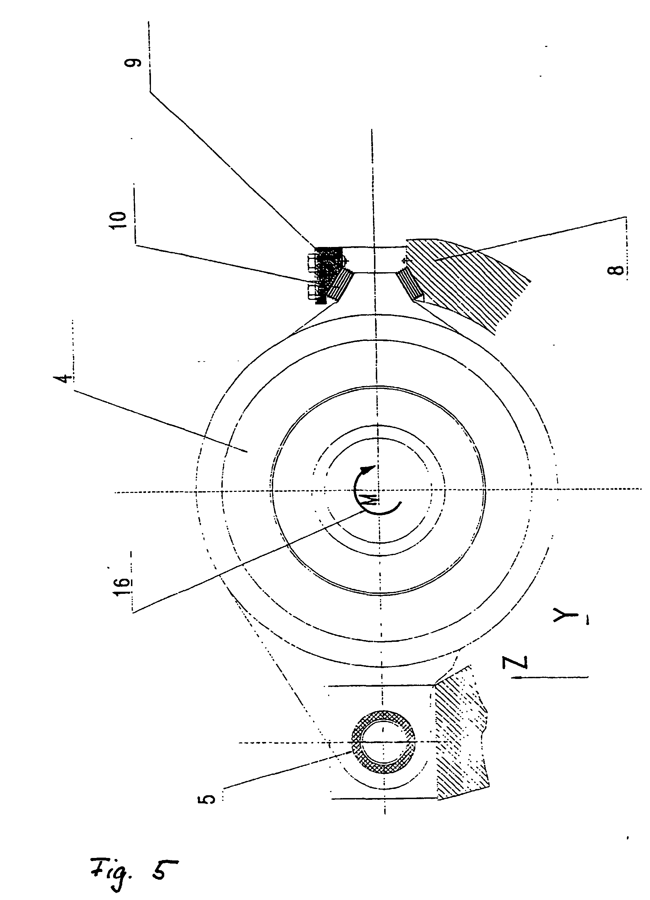

Die erfindungsgemäße Lagerung weist zusammengefaßt folgende Vorteile auf:
- einfache leicht austauschbare Elastomerlager
- geringer Einbauraum (Fig. 5 zeigt den Vergleich des Einbauraums der in der Erfindung beschriebenen Getriebelagerung mit der im Stand der Technik sehr gebräuchlichen Ultrabuchsenlagerung.
- Die für die Aufnahme der Ultrabuchsen (5) aufwendig zu fertigenden Drehmomentstützen mit den für die Ultrabuchsen (5) vorgesehenen Bohrungen, welche auch die erforderliche Guß- Kastengröße zum Gießen des Getriebegehäuses bestimmen, werden durch den einfach aufgebauten erfindungsgemäßen Getriebekeil (7) ersetzt.
- Die bei dem Einsatz von Ultrabuchsen (5) erforderliche Achse mit der entsprechenden Kraftumlenkung entfällt bei der erfindungsgemäßen Anordnung.
- Bei den Anlagen des Standes der Technik wird die Gesamtbreite der Anlage durch die Breite der bisherigen Drehmomentstützen bestimmt. Diese Breite ist für den Transport der Anlagen entscheidend. Dies ist vor allem bei Anlagen für Übersee Transport wichtig, da aus Kostengründen vorgegebene Containermaße eingehalten werden sollten. Mit Hilfe der erfindungsgemäßen Lagerung kann auch der gesamte Maschinenträger (6) kleiner und damit kostengünstiger ausgeführt werden.
- Durch den einfacheren Aufbau spart diese Konstruktion Kosten und Gewicht bei der Getriebeherstellung, der Getriebelagerung und bei den restlichen kleiner zu dimensionierenden Bauteilen. Bei einer 1,5 Windkraftanlage wird somit eine Gewichtseinsparung von insgesamt 100 kg bis 300 kg erreicht.
- Durch die schmalere Bauweise des gesamten Getriebes mit Keillagerung ist es möglich, das Getriebe mit einem auf der Windkraftanlage befindlichen Kran zwischen den Trägern des Maschinenrahmens hindurch abzusenken. Dies erspart die Krankosten bei einer eventuell nötigen Getriebereparatur. Diese Möglichkeit ist für Off-Shore Anlagen besonders vorteilhaft, da Off-Shore Krane teuer sind und nur bei gutem Wetter arbeiten was wiederum lange Stillstandszeiten zur Folge hat.
- Bei Orkanen treten bei Windkraftanlagen sehr starke Belastungen auf. Die erfindungsgemäße Lagerung kann in diesen selten auftretenden Fällen überproportional hohe Lasten, ohne Schaden, übertragen. Hohe Stöße werden dabei elastisch abgefangen, so daß die verbundenen Bauteile nicht anschlagen.

## Patentansprüche

1. Lagerung für Motoren oder Getriebe zur Dämpfung von unerwünschten Schwingungen im wesentlichen bestehend aus mindestens zwei elastomeren Lagern, die zueinander und gegenüber dem Motor / Getriebe gezielt angeordnet und mit mehrschichtigen Elastomerbauteilen versehen sind, **dadurch gekennzeichnet, dass** die elastomeren Lager Keillager (13) sind , die jeweils aus einem Klemmschuh (26) bestehen, welcher aus zwei mittels Befestigungsmitteln (25) gegeneinander verspannbaren Klemmflanschen (8) und (9) gebildet wird, die jeweils zwei schräge, einen Keilwinkel (14, 15) zueinander bildende Flächen aufweisen, auf denen die mehrschichtigen Elastomerbauteile (10) angebracht sind, und einen Raum zur passenden Aufnahme und Verspannung des mit dem gleichen Keilwinkel (14, 15) ausgestatteten Maschinenkeils (7) bilden, wobei besagte Keillager (13) radial zur Antriebs- oder Getriebewelle positioniert sind, und die mehrschichtigen Elastomerbauteile (10) bezüglich ihrer Längenausdehnung in Längsrichtung der Antriebs- / Getriebewelle angeordnet sind.

2. Lagerung nach Anspruch 1, **dadurch gekennzeichnet, dass** der Keilwinkel (14, 15) des Keillagers (13) zur Antriebs- oder Getriebewelle hin geöffnet ist.

3. Lagerung nach Anspruch 1 oder 2, **dadurch gekennzeichnet, dass** der Keilwinkel (14, 15) 10 - 60° beträgt.

4. Lagerung nach Anspruch 3, **dadurch gekennzeichnet, dass** der Keilwinkel 20 - 45° beträgt.

5. Lagerung nach einem der Ansprüche 1 bis 4, **dadurch gekennzeichnet, dass** die Elastomerlager (10) aus zwei bis sechs Elastomerschichten (11) bestehen, die durch Zwischenbleche (12) voneinander getrennt sind.

6. Lagerung nach einem der Ansprüche 1 bis 5, **dadurch gekennzeichnet, dass** die schrägen Flächen der Klemmflansche (8, 9) sowie entsprechend die auf ihnen angebrachten Elastomerlager (10) konkav oder konvex ausgebildet sind.

7. Lagerung nach einem der Ansprüche 1 bis 6, **dadurch gekennzeichnet, dass** sie aus drei elastomeren Keillagern (13) besteht.

8. Lagerung nach einem der Ansprüche 1 bis 7, **dadurch gekennzeichnet, dass** sie ein weiteres elastomeres Lagerbauelement aufweist, welches aus mehreren mehrschichtigen elastomeren Lagersegmenten (20) besteht, die umlaufend um den Antriebs- / Getriebeblock (4) angeordnet und an einen ebenfalls in gleicher Weise umlaufenden Trageflansch (22), der an einer mit dem Getriebe - / Motorblock verbundenen Tragekonsole (21) angebracht ist, mittels Klemmverspannungen (24) befestigt sind, wobei die mehrschichtigen elastomeren Lagersegmente (20) bezüglich ihrer Längenausdehnung senkrecht zur Antriebs- / Getriebewelle angeordnet sind.

9. Lagerung nach Anspruch 8, **dadurch gekennzeichnet, dass** besagtes elastomere Lagerbauelement aus 4 bis 20 Lagersegmenten (20) besteht.

10. Lagerung nach Anspruch 8 oder 9, **dadurch gekennzeichnet, dass** besagtes Lagerbauelement aus mehreren, mindestens zwei Lagersegmente (20) enthaltenden Teilen besteht, welche durch mehrschichtige elastomere Keillager (23) voneinander getrennt sind, die mit der Tragekonsole (21) verbunden sind und einen Keilwinkel aufweisen, der zur Antriebs - / Getriebewelle hin geschlossen ist und die elastomeren Lager (10), welche auf den schrägen Flächen der Keillager (23) angebracht und bezüglich ihrer Längenausdehnung in Längsrichtung der Antriebs- / Getriebewelle angeordnet sind.

11. Lagerung nach Anspruch 10, **dadurch gekennzeichnet, dass** besagtes Lagerbauelement aus zwei Teilen besteht.

12. Verfahren zur Körperschallisolierung und zur Dämpfung von unerwünschten Schwingungskräften, welche in angetriebenen Maschinen in x-, y- und z - Richtung auftreten, **dadurch gekennzeichnet, dass** man eine Lagerung gemäß der Ansprüche 1 - 11 einsetzt.

13. Verwendung einer Lagerung gemäß der Ansprüche 1 - 11 zum Einbau in Windkraftanlagen.

## Claims

1. Motor or transmission support for the damping of undesired vibrations, essentially consisting of at least two elastomeric bearings which are arranged in a specific manner with respect to one another and with respect to the motor/transmission and are provided with multilayered elastomer components, **characterized in that** the elastomeric bearings are wedge bearings (13) which each consist of a clamp shoe (26) formed by two clamp flanges (8) and (9) which can be tensioned against one another by means of fixing means (25) and which each have two inclined surfaces which form a wedge angle (14, 15) to one another and to which the multilayered elastomer components (10) are attached, and form a space for the fitting accommodation and tensioning of the machine wedge (7) provided with the same wedge angle (14, 15), where the said wedge bearings (13) are positioned radially to the drive or transmission shaft, and the multilayered elastomer components (10) are arranged in the longitudinal direction, with respect to their length dimension, of the drive/transmission shaft.

2. Support according to Claim 1, **characterized in that** the wedge angle (14, 15) of the wedge bearing (13) is open towards the drive or transmission shaft.

3. Support according to Claim 1 or 2, **characterized in that** the wedge angle (14, 15) is 10 - 60°.

4. Support according to Claim 3, **characterized in that** the wedge angle is 20 - 45°.

5. Support according to one of Claims 1 to 4, **characterized in that** the elastomer bearings (10) consist of two to six elastomer layers (11), which are separated from one another by intermediate metal sheets (12).

6. Support according to one of Claims 1 to 5, **characterized in that** the inclined surfaces of the clamp flange (8, 9) and correspondingly the elastomer bearings (10) attached thereto have a concave or convex shape.

7. Support according to one of Claims 1 to 6, **characterized in that** it consists of three elastomeric wedge bearings (13).

8. Support according to one of Claims 1 to 7, **characterized in that** it has a further elastomeric bearing component which consists of a plurality of multilayered elastomeric bearing segments (20) which are arranged circumferentially around the drive/transmission block (4) and are attached by means of clamp tensioners (24) to a supporting flange (22), which is likewise circumferential in the same way and is attached to a support console (21) connected to the transmission/motor block, where the multilayered elastomeric bearing segments (20) are arranged perpendicularly, with respect to their length dimension, to the drive/transmission shaft.

9. Support according to Claim 8, **characterized in that** the said elastomeric bearing component consists of 4 to 20 bearing segments (20).

10. Support according to Claim 8 or 9, **characterized in that** the said bearing component consists of a plurality of parts which comprise at least two bearing segments (20) and are separated from one another by multilayered elastomeric wedge bearings (23), which are connected to the support console (21) and have a wedge angle which is closed towards the drive/transmission shaft, and the elastomeric bearings (10), which are attached to the inclined surfaces of the wedge bearings (23) and are arranged in the longitudinal direction, with respect to their length dimension, of the drive/transmission shaft.

11. Support according to Claim 10, **characterized in that** the said bearing component consists of two parts.

12. Method for insulation against structure-borne noise and for damping undesired vibrational forces which occur in the x, y and z direction in driven machines, **characterized in that** a support according to Claims 1 - 11 is employed.

13. Use of a support according to Claims 1 - 11 for installation in wind turbines.

## Revendications

1. Support de moteur ou de transmission pour l'amortissement de vibrations non souhaitées, constitué essentiellement par au moins deux paliers élastomériques qui sont agencés d'une façon spécifique les uns par rapport aux autres et par rapport au moteur/à la transmission et qui sont munis de composants élastomériques multicouches, **caractérisé en ce que** les paliers élastomériques sont des paliers en coin (13) dont chacun est constitué par un sabot de fixation (26) formé par deux brides de fixation (8) et (9) qui peuvent être mises en tension l'une contre l'autre au moyen d'un moyen de fixation (25) et qui comportent chacune deux surfaces inclinées qui forment un angle de coin (14, 15) l'une par rapport à l'autre et sur lesquelles les composants élastomériques multicouches (10) sont liés, et qui forment un espace pour le logement par ajustement et la mise sous tension du coin de machine (7) présentant le même angle de coin (14, 15), où lesdits paliers en coin (13) sont positionnés radialement par rapport à l'arbre d'entraînement ou de transmission, et les composants élastomériques multicouches (10) sont agencés suivant la direction longitudinale, par rapport à leur dimension de longueur, de l'arbre d'entraînement/de transmission.

2. Support selon la revendication 1, **caractérisé en ce que** l'angle de coin (14, 15) du palier en coin (13) est ouvert en direction de l'arbre d'entraînement ou de transmission.

3. Support selon la revendication 1 ou 2, **caractérisé en ce que** l'angle de coin (14, 15) est de 10 - 60°.

4. Support selon la revendication 3, **caractérisé en ce que** l'angle de coin est de 20 - 45°.

5. Support selon l'une des revendications 1 à 4, **caractérisé en ce que** les paliers élastomériques (10) sont constitués par deux à six couches élastomériques (11), qui sont séparées les unes des autres par des feuilles métalliques intermédiaires (12).

6. Support selon l'une des revendications 1 à 5, **caractérisé en ce que** les surfaces inclinées de la bride de fixation (8, 9) et en correspondance des paliers élastomériques (10) qui leur sont liés présentent une forme concave ou convexe.

7. Support selon l'une des revendications 1 à 6, **caractérisé en ce qu'**il est constitué par trois paliers en coin élastomériques (13).

8. Support selon l'une des revendications 1 à 7, **caractérisé en ce qu'**il comporte un autre composant de palier élastomérique qui est constitué par une pluralité de segments de palier élastomériques multicouches (20) qui sont agencés circonférentiellement autour du bloc d'entraînement/de transmission (4) et qui sont liés au moyen de dispositifs de mise sous tension de fixation (24) à une bride de support (22), qui est de même circonférentielle de la même façon et qui est liée à une console de support (21) qui est connectée au bloc de transmission/moteur, où les segments de palier élastomériques multicouches (20) sont agencés perpendiculairement, par rapport à leur dimension de longueur, à l'arbre d'entraînement/de transmission.

9. Support selon la revendication 8, **caractérisé en ce que** ledit composant de palier élastomérique est constitué par 4 à 20 segments de palier (20).

10. Support selon la revendication 8 ou 9, **caractérisé en ce que** ledit composant de palier est constitué par une pluralité de parties qui comprennent au moins deux segments de palier (20) et qui sont séparées les unes des autres par des paliers en coin élastomériques multicouches (23), qui sont connectés à la console de support (21) et qui présentent un angle de coin qui est fermé en direction de l'arbre d'entraînement/de transmission, et par les paliers élastomériques (10), qui sont liés aux surfaces inclinées des paliers en coin (23) et qui sont agencés suivant la direction longitudinale, par rapport à leur dimension de longueur, de l'arbre d'entraînement/de transmission.

11. Support selon la revendication 10, **caractérisé en ce que** ledit composant de palier est constitué par deux parties.

12. Procédé d'isolation vis-à-vis d'un bruit généré par une structure et d'amortissement de forces de vibration non souhaitées qui se produisent suivant les directions x, y et z dans des machines entraînées, **caractérisé en ce qu'**un support selon les revendications 1 à 11 est utilisé.

13. Utilisation d'un support selon les revendications 1 à 11 pour une installation dans des turbines d'éolienne.
